# EUROPEAN PATENT SPECIFICATION

(11) **EP 1 564 087 B1**
(45) Date of publication and mention of the grant of the patent: **05.09.2007**
(21) Application number: 05002061.9
(22) Date of filing: 01.02.2005
(51) Int. Cl.: B60R 21/26

(54) **Gas generator**
Gasgenerator
Générateur de gaz

(30) Priority: 10.02.2004 JP 2004033828
(43) Date of publication of application: 17.08.2005
(73) Proprietor: DAICEL CHEMICAL INDUSTRIES, LTD., Sakai-shi, Osaka (JP)
(72) Inventor: Kato, Kazuhiro, Shisou-gun Hyogo (JP); Oda, Shingo, Himeji-shi Hyogo (JP); Niwa, Hirotoshi, Himeji-shi Hyogo (JP); Kurihara, Yuji, Sennan-gun Osaka (JP); Yabuta, Mikio, Himeji-shi Hyogo (JP)
(74) Representative: Grünecker, Kinkeldey, Stockmair & Schwanhäusser Anwaltssozietät

(56) References cited:
- DE-A1- 19 600 625
- US-A- 5 005 486
- US-A- 5 955 699
- US-A- 6 106 009

## Description

### 1. Field of the Invention

The present invention relates to a gas generator according to the preamble of claim 1. Such gas generator is to be disposed in a vehicle or the like and activated by an impact or the like to generate gas. More particularly, the invention relates to a small-sized gas generator such as a gas generator for a pretensioner.

### 2. Description of the Related Art

A gas generator of the above type, corresponding to the preamble of claim 1, is known from WO-A-03/066390. A related gas generator is known from US-A-5 955 699 and US-A-5 005 486.

Various vehicles such as automobiles are provided with seat belts to protect passengers from an impact occurring during a collision. In recent years, seat belts comprising a pretensioner mechanism for protecting the passenger by tightening the seat belt have been developed.

Generally, such a seat belt pretensioner is constituted by a mechanism for tightening the seat belt and a gas generator for generating gas to activate the mechanism. A small gas generator having a small overall volume (a so-called micro gas generator, hereinafter "MGG") is used as the gas generator. This small gas generator typically includes an activation starting device such as an igniter, and a gas generating agent adapted to be ignited by the activation starting device to generate gas through combustion. The small gas generator is typically manufactured by attaching an open end of a cup-like member, formed into a cylinder, to a bottom to a collar member for holding the igniter, such that the gas generating agent charged into the cup-like member makes contact with the igniter.

A small gas generator that can be used favorably in a pretensioner is disclosed in WO-A No. 95/11421, for example. In the small gas generator disclosed in this publication, the periphery of a collar which holds an igniter is held by crimping an end of an open end side of a cup-like member accommodating a gas generating agent, and thus the igniter collar member and the cup-like member are integrated. A weaker portion is provided on the bottom surface of the cup-like member, accommodating the gas generating agent, for discharging a gas generated by combustion of the gas generating agent.

In other words, conventional gas generators provided for use in pretensioners are constituted to discharge gas from the bottom surface of the cup-like member in the axial direction of the gas generator, as disclosed in WO-A No. 95/11421.

However, in a gas generator such as that disclosed in WO-A No. 95/11421, which ejects gas in a single direction (i.e., in the axial direction), it is difficult to discharge gas in another desired direction. Therefore, if the gas generator malfunctions and ejects gas before it is secured, propulsion may be generated by the ejected gas, thus propelling the gas generator into the air. It is therefore difficult to secure manufacturing safety with such a gas generator. Even after the gas generator is attached to the pretensioner, the gas generator must be securely installed in the pretensioner to ensure that the gas released from the gas generator upon activation does not propel or dislocate the gas generator. In other words, because the gas generator is designed to eject gas a concentrated fashion in a single direction, the structure of the part where the gas generator is installed may be easily strained, and hence the structure of this part must be made stronger.

### SUMMARY OF THE INVENTION

It is desirable that a small gas generator adapted to be used in a pretensioner or the like be capable of discharging gas in an arbitrary direction in accordance with the demands of its mounting state and the like. In other words, when the gas generator is activated, gas is preferably discharged in such a manner that no large propulsive force is generated in any single direction. Moreover, the gas generator is preferably able to accommodate the demands of its mounting state and so on, and also to requirements such as offsetting the gas ejection direction peripherally to a certain extent.

However, conventional small gas generators are designed on the premise that gas is discharged exclusively in the axial direction, and hence if forced attempts are made to discharge the gas in the radial direction (by forming fissures in the peripheral wall portion of the cup-like member), the edge part at the end of the cup-like member (e.g., the part which holds the peripheral surface of the collar member by being crimped thereto) also becomes easily breakable, and as a result, the crimped part is likely to dislocate. If the crimped part dislocates, the cup-like member or fragments thereof, separated from the igniter collar member, may block the gas discharge port to a certain extent, and in such a case, it would become impossible to obtain a sufficient effect. Furthermore, if the gas ejection direction is offset peripherally to a certain extent, the load applied to the edge portion at the end of the cup-like member becomes biased, making the part at which the edge of the end is crimped likely to dislocate.

The present invention is to solve the problems existing in a conventional small gas generator adopted to be used in a pretensioner, and an object of the present invention is to provide a small gas generator having a suppressed overall volume, which is capable of preventing a cup-like member or fragments thereof from being scattered even when gas produced by an operation the pretensioner is discharged in the radial direction of the gas generator, and in which propulsion is not generated by the discharged gas.

To solve the problems described above, the present invention provides the gas generator according to claim 1. In this gas generator, the thickness of a joining portion of a cup-like member that accommodates a gas generating agent to be joined to an igniter collar member is increased, such that when the gas generator is activated, the cup-like member, or fragments thereof, is prevented from dislocating from the igniter collar member.

More specifically, the present invention provides a gas generator comprising an igniter assembly in which an igniter functioning as activation starting means is held by an igniter collar member, a gas generating agent which generates gas when ignited by an activation of the igniter, and a cup-like member having a cylindrical form with one closed end, in which the gas generating agent is accommodated, wherein a joining portion which is joined to the igniter collar member in the igniter assembly is provided on an open side end portion of the cup-like member, and the cup-like member and igniter assembly are integrated by this joining portion, and the thickness of the joining portion provided on the cup-like member is greater than the thickness of a side wall portion of the cup-like member.

In the gas generator of the present invention, the joining portion formed on the open side end portion of the cup-like member has to be thicker than the other portions and wall surfaces constituting the cup-like member, and particularly thicker than the side wall portion. By forming the joining portion to be thicker than the side wall portion, the strength of the joining portion is increased, and hence even when the gas generated by combustion of the gas generating agent causes the internal pressure of the cup-like member to rise, such that fissures are formed in the cup-like member, these fissures do not extend to the joining portion. As a result, even when the gas generated by an activation is discharged in an arbitrary direction, particularly in the radial direction of the gas generator, the joining condition between the cup-like member and the igniter collar member is maintained after the activation, and hence the cup-like member or fragments thereof can be prevented from flying.

The portion which is to become the joining portion may be formed with a greater thickness when press-molding the cup-like member, for example, or the portion which is to become the joining portion may be reinforced by or adhered to another member or the like after press-molding the cup-like member at a constant thickness.

The aforementioned open side end portion of the cup-like member typically refers to the end portion of the side on which an igniter, serving as an activation starting member of the gas generator, or an igniter assembly including the igniter is to be assembled. The joining portion is the portion on this open side end portion, which is joined to the igniter collar member for holding the igniter, and portions in the vicinity thereof. In other words, when the cup-like member and the igniter collar member are joined in point, line, and surface contact, this encompasses not only the contacting portions, but also the vicinity of these portions.

The joining portion may be formed as well-known means (e.g., a constitution and materials) for joining metals to each other. For example, the joining portion may be realized as a threaded groove portion in a case where the open end portion of the cup-like member is screwed to the igniter collar member, or may be realized as a flange portion in a case where a flange portion formed on either member is engaged to an appropriate location on the other member or fixed to an appropriate location on the other member by crimping.

In the present invention, the joining portion is a flange portion formed by bending the open side end portion of the cup-like member. This is because the open end portion of the cup-like member and the igniter collar member can be joined easily and securely. It is preferable that the flange portion be fixed to the igniter collar member in the igniter assembly by crimping. For example, the flange portion may be fixed to the igniter collar member by crimping the peripheral edge or the like of the flange portion to an appropriate location on the igniter collar member, or by crimping an appropriate location on the igniter collar member so that the flange portion formed on the cup-like member side is held thereby. Alternatively, the flange portion formed on the cup-like member and the collar member may be fixed together by crimping using a third member. When the two members are fixed by crimping, the fixing operation can be performed safely without using heat and so on, and the fixing operation can also be performed easily.

Particularly, in the gas generator of the present invention, a fragile portion, formed to be the weakest part of the wall portion of the cup-like member in relation to the pressure and heat generated in the interior of the cup-like member, is provided in the side wall portion of the cup-like member as a part which fissures first to ensure that the side wall portion side fissures first among the parts of the cup-like member which receive the pressure of the gas generated by combustion of the gas generating agent, or in other words the side wall portion and base surface (e.g., closed side end surface). This fragile portion may be formed by forming a notch in an appropriate location in the side wall surface to reduce the thickness of the side wall surface within a fixed range, or forming an opening and blocking the opening with a member which breaks or disappears easily. The fragile portion is preferably formed as a notch in the side wall portion. The notch may be formed to extend in the axial direction of the cup-like member, or may be formed intermittently or in a zigzag pattern in the circumferential direction of the cup-like member. Moreover, the notch may be formed in at least one of the inner peripheral surface and the outer peripheral surface of the side wall portion. When the fragile portion is formed as a notch extending in the axial direction of the cup-like member, fissures can be formed reliably in the side wall portion of the cup-like member alone, and hence this is particularly preferable.

Since the fragile portion serves as the part from which gas is discharged during an operation, the fragile portions is preferably provided equally in the circumferential direction of the cup-like member. More specifically, when the number of formed fragile portions is set to "n, " the fragile portions are preferably provided to satisfy a relationship in which the interior angle of adjacent fragile portions is 360 degrees/n. Furthermore, the gas discharge direction and discharge amount are preferably adjusted such that the resultant force of the propulsion (e.g., vector) generated by the discharged gas reaches substantially zero. By forming the fragile portions in this manner, the propulsion generated by the ejected gas is cancelled, and hence the gas generator itself can be prevented from being propelled. Moreover, fixing means for fixing the gas generator to a pretensioner or the like can be simplified since there is no need to resist this propulsion. However, when the gas generator is fixed securely to the pretensioner, such that the propulsion generated by the gas discharged during an operation is suppressed and the gas generator is disposed to be able to resist this propulsion, the fragile portions may be distributed unevenly on one part in the circumferential direction of the cup-like member. By unevenly distributing the fragile portions on one part in the circumferential direction of the cup-like member, more gas can be discharged in the direction, which the fragile portions face, which is particularly preferable.

Particularly in the gas generator of the present invention, the thickness of the joining portion provided on the cup-like member is preferably at least 1.3 times, and more preferably at least 1.5 times, the thickness of the side wall portion of the cup-like member. In so doing, breakage and fissuring in the flange part is prevented even more reliably. Further, the thickness of the side wall portion of the cup-like member is preferably set to between 0.2 and 1.5mm, and the thickness of the joining portion is preferably set to between 0.4 and 3.0mm.

According to the gas generator of the present invention, a cup-like member or fragments thereof can be prevented from flying even when gas generated by an activation of the gas generator is discharged in the radial direction of the gas generator. Particularly in this gas generator, the orientation in which the gas is discharged cancels the propulsion generated through discharge of the gas, and hence a phenomenon whereby the gas generator itself is propelled into flight during an operation can be eliminated, enabling an improvement in safety during manufacture or assembly.

The cup-like member which accommodates a gas generating agent is joined directly to an igniter collar, and hence the overall volume of the gas generator can be suppressed to form a small gas generator which can be used favorably in a pretensioner.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
Fig. 1(A) is an axial sectional view of a small gas generator according to an embodiment of the present invention, and Fig. 1(B) is a side view showing the external appearance of this gas generator;
Fig. 2 is a side view showing a cup-like member after the gas generator has been activated; and
Fig. 3 (A), Fig. 3(B) and Fig. 3(C) are schematic views showing a gas generator in a comparative aspect.

### DETAILED DESCRIPTION OF THE PRESENT INVENTION

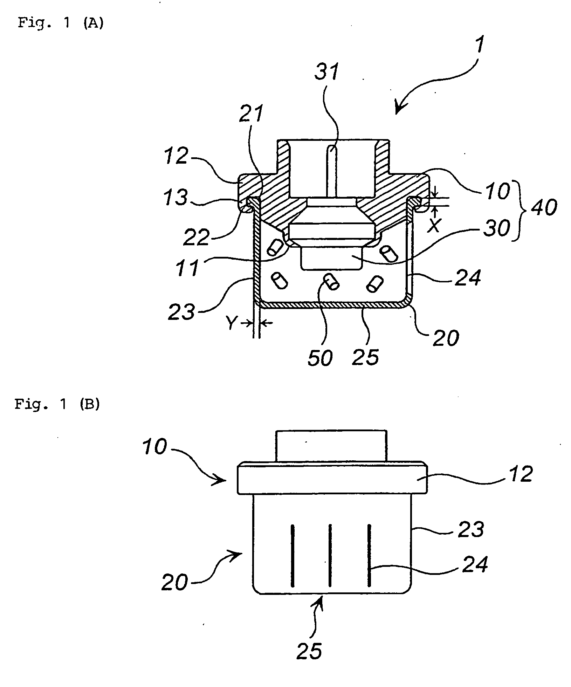

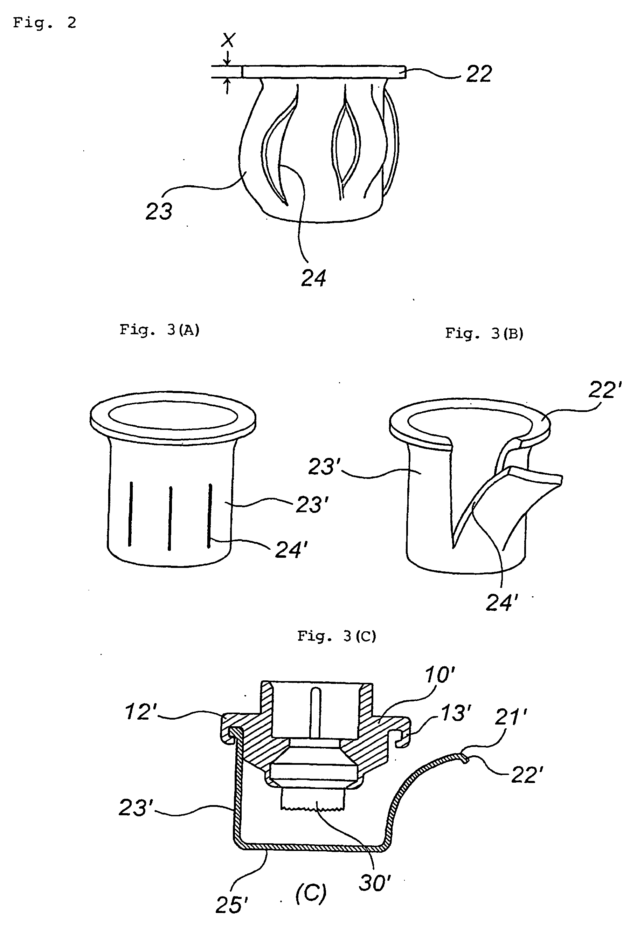

An embodiment of the present invention will be described below using the drawings. Fig. 1 shows a small-sized gas generator 1 according to this embodiment, Fig. 1(A) being an axial sectional view thereof, and Fig. 1(B) being a side view showing the external appearance thereof. Fig. 2 is a side view of a cup-like member 20 after the gas generator 1 of this embodiment has been activated, and Fig. 3 is a schematic view showing a comparative aspect, which is beneficial for understanding the effects of the present invention.

As shown in Fig. 1(A), the gas generator 1 in this embodiment comprises an igniter assembly 40 in which an electric igniter 30, activated upon reception of an activation signal, is supported by a metallic igniter collar member 10, a gas generating agent 50 disposed in contact with the igniter assembly 40, and a cup-like member 20 in the form of a cylinder with a bottom which accommodates the gas generating agent 50 and joined to the igniter collar member 10.

In the gas generator shown in Fig. 1, the igniter assembly 40 may be formed such that the electric igniter 30 is disposed inside the metallic igniter collar member 10 and the igniter 30 is integrated with the collar member 10 by crimping an end portion 11 of the part of the collar member which holds the igniter, or may be formed such that a base portion (e.g., a basic constitutional part) of the igniter comprising an electro conductive pin 31 or a priming (not shown) is disposed in the center of the igniter collar member 10 and a resin material is injected between the base portion of the igniter 30 and the igniter collar member 10.

In this embodiment, a bulging portion 12, protruding radially outward in the part near center with respect to the axial direction, is formed on the outer peripheral surface of the igniter collar member 10, and an outward flange portion 22 is formed on an open side end portion 21 (i.e., the upper end portion in Fig. 1) of the cup-like member 20, having a cylindrical shape with a bottom wall. By abutting the outward flange portion 22, formed on the cup-like member 20, against the bulging portion 12 of the igniter collar member 10 and crimping a protruding portion 13 formed on the outer periphery of the bulging portion 12, the flange portion 22 of the cup-like member 20 is held by the bulging portion 12 and the crimped protruding portion 13 of the igniter collar member 10, such that the cup-like member 20 and the igniter assembly 40 (or the igniter collar member 10) are integrated. In this state, the flange portion 22, provided on the cup-like member 20, corresponds to a joining portion of the present invention.

The flange portion 22, functioning as a joining portion, is formed on the cup-like member 20 such that a thickness X thereof is greater than a thickness Y of a wall portion of the part which defines the accommodating space of the gas generating agent 50, and particularly of a side wall 23 portion. In so doing, even when fissures are formed in part of the cup-like member 20 by the pressure or flame produced in the internal space of the cup-like member 20, the fissures do not reach the flange portion 22, and therefore the joining condition between the cup-like member 20 and the igniter assembly 40 (or the igniter collar member 10) is maintained even after the gas generator 1 is activated, thus enabling a desirable operation performance.

Particularly in the gas generator 1 in this embodiment, slits 24 formed by reducing the thickness of the side wall 23 than the other portions thereof is provided in the side wall 23 of the cup-like member 20. This slits 24 are fissured by the pressure or flame inside the cup-like member 20 before the other parts, and hence corresponds to the aforementioned fragile portion. In Fig. 1, the slits 24 do not penetrate the side wall 23, but is formed such that the inner peripheral side of the cup-like member 20 is closed. In this embodiment, the slits 24 extend in the axial direction of the gas generator 1, and a plurality of slits 24 are formed in the side wall 23 portion of the cup-like member 20 and distributed unevenly in a certain part of the side wall 23. As shown in Fig. 1, when a fragile portion, such as the slits 24 are provided, the slits 24 fissures first. Therefore, the ejection direction of the gas generated by an activation of the gas generator 1 can be set optionally, and the portions of the cup-like member 20, at which fissures are formed during gas ejection, can be adjusted.

Particularly when the cup-like member 20 in this embodiment is formed of aluminum (e.g., A5052-H24), as an example of the numerical data pertaining thereto, the thickness Y of the side wall 23 portion and a base portion 25 is preferably between 0.7 and 1.5mm, and the thickness X of the flange portion 22 (e.g., joining portion) is preferably between 1.3 and 2.0mm. The thickness ratio X/Y of the side wall 23 portion and base portion 25 to the flange portion 22 is preferably regulated within the range of 1.3 to 1.9.

When the gas generator 1 formed as shown in Fig. 1 is activated, the slits 24, serving as a fragile portion, fissures first, and gas for activating a drive portion (e.g., a device such as a piston for driving a winding mechanism of a seat belt or the like) of a pretensioner is discharged from the fissured part. After the gas generator 1 is activated in this manner, or in other words, after the slits 24 are fissured, the cup-like member 20 takes the form shown in Fig. 2. As shown in Fig. 2, even though the cup-like member 20 fissures in the axial direction from the slits 24, the fractures do not extend to the thicker flange portion 22.

If a flange portion 22' (i.e., joining portion) is formed with the same thickness as a remaining side wall portion 23', as shown in the perspective view in Fig. 3 showing the fissuring condition of the cup-like member, fractures caused by the fissuring of slit portions 24' formed in the cup-like member as shown in Fig. 3 (A) reach the flange portion 22', as shown in Fig. 3(B), causing the fractured flange portion 22' to dislocate from the crimped portion of an igniter collar member 10' as shown in Fig. 3(C). As a result, the cup-like member 20' itself becomes entirely dislocated from an igniter assembly 40' (in other words the igniter collar member 10'), and is propelled by the surplus gas pressure. When the cup-like member 20, or fragments thereof, is propelled, a gas flow part leading to a drive portion (e.g., a piston or the like) for driving the winding mechanism of a seat belt or the like in the pretensioner may be blocked to a certain extent, or a flying object may be trapped in a seat belt winding drive portion (e.g., a gear or the like), for example, thus hindering rotation of the gear so that an optimum operating performance cannot be obtained.

Therefore, increasing the thickness of a joining portion, such as the flange portion 22, in the manner described in this embodiment, so that fissures in the joining portion can be avoided and flying or scattered fragments can be prevented, is important for ensuring the operational reliability of the pretensioner and so on.

## Claims

1. A gas generator (1), comprising: an igniter assembly (40) having an igniter (30) and an igniter collar member (10) supporting the igniter (30);
a gas generating agent (50) which generates a gas when ignited by an activation of the igniter (30); and
a cup-like member (20) that accommodates the gas generating agent (50), the cup-like member (20) including a side wall portion (23), an open end portion (21), and a closed end portion (25) closed by a bottom wall, the open end portion (21) being provided with a joining portion (22) attached to the igniter collar member (10), wherein the joining portion (22) is a flange portion formed by bending the open end portion (21) of the cup-like member (20), and the cup-like member (20) and the igniter assembly (40) are integrated by said joining portion (22), **characterised by** a thickness of the joining portion (22) being greater than a thickness of the side wall portion (23), such that a strength of the joining portion being greater than a strength of the side wall portion, wherein the side wall portion (23) is provided with a fragile portion (24), weaker than a rest of the side wall portion (23), such that only the fragile portion (24) breaks by pressure or heat generated by the gas generating agent (50).

2. The gas generator (1) according to claim 1, wherein the flange portion (22) is fixed to the igniter collar member (10) by crimping.

3. The gas generator (1) according to claim 1 or 2, wherein the fragile portion (24) is a notch extending in an axial direction of the cup-like member (20), and the notch (24) is formed between the joining portion (22) and the bottom wall (25).

4. The gas generator (1) according to any one of claims 1 to 3, wherein a plurality of fragile portions (24) are provided evenly in a circumferential direction of the cup-like member (20).

5. The gas generator (1) according to claim 1, wherein the thickness of the joining portion (22) is at least 1.3 times greater than the thickness of the side wall portion (23).

## Patentansprüche

1. Ein Gasgenerator (1), umfassend: eine Zündanordnung (40) mit einer Zündvorrichtung (30) und einem Manschettenelement (10) für die Zündvorrichtung, welche die Zündvorrichtung (30) trägt;
einen Gaserzeugungswirkstoff (50), welcher ein Gas erzeugt, wenn er durch eine Aktivierung der Zündvorrichtung (30) entzündet wird; und
ein schalenförmiges Element (20), welches den Gaserzeugungswirkstoff (50) aufnimmt, wobei das schalenförmige Element (20) einen Seitenwandabschnitt (23), einen offenen Endabschnitt (21), und einen geschlossenen Endabschnitt (25), der durch eine Bodenwand geschlossen ist, umfasst, wobei der offene Endabschnitt (21) mit einem Verbindungsabschnitt (22) ausgebildet ist, der an dem Manschettenelement (10) für die Zündvorrichtung angebracht ist, wobei der Verbindungsabschnitt (22) ein Flanschabschnitt ist, der durch Biegen des offenen Endabschnitts (21) des schalenförmigen Elementes (20) ausgebildet ist, und wobei das schalenförmige Element (20) und die Zündanordnung (40) über den besagten Verbindungsabschnitt (22) integriert sind, **dadurch gekennzeichnet, dass** eine Dicke des Verbindungsabschnitts (22) größer ist als eine Dicke des Seitenwandabschnitts (23), so dass eine Stärke des Verbindungsabschnitts größer ist als eine Stärke des Seitenwandabschnitts, wobei der Seitenwandabschnitt (23) mit einem zerbrechlichen Abschnitt (24) ausgebildet ist, der schwächer ist als ein Rest des Seitenwandabschnitts (23), so dass nur der zerbrechliche Abschnitt (24) durch einen von dem Gaserzeugungswirkstoff (50) erzeugten Druck oder eine von dem Gaserzeugungswirkstoff (50) erzeugte Hitze aufbricht.

2. Der Gasgenerator nach Anspruch 1, wobei der Flanschabschnitt (22) durch Crimpen an dem Manschettenelement (10) für die Zündvorrichtung fixiert ist.

3. Der Gasgenerator nach Anspruch 1 oder 2, wobei der zerbrechliche Abschnitt (24) eine Nut ist, die sich in einer axialen Richtung des schalenförmigen Elementes (20) erstreckt, wobei die Nut (24) zwischen dem Verbindungsabschnitt (22) und der Bodenwand (25) ausgebildet ist.

4. Der Gasgenerator (1) nach einem der Ansprüche 1 bis 3, wobei eine Vielzahl von zerbrechlichen Abschnitten (24) gleichmäßig in einer Umfangsrichtung des schalenförmigen Elementes (20) ausgebildet ist.

5. Der Gasgenerator (1) nach Anspruch 1, wobei die Dicke des Verbindungsabschnitts (22) zumindest 1,3 mal größer ist als die Dicke des Seitenwandabschnitts (23).

## Revendications

1. Générateur de gaz (1) comprenant : un ensemble (40) d'allumage comportant un allumeur (30) et un élément (10) formant un collier d'allumeur soutenant l'allumeur (30) ;
un agent (50) producteur de gaz qui produit un gaz quand il est allumé par activation de l'allumeur (30) ;
et un élément (20) de type godet qui contient l'agent (50) producteur de gaz, l'élément (20) de type godet contenant une partie (23) formant une paroi latérale, une partie (21) d'extrémité ouverte et une partie (25) d'extrémité fermée, fermée par une paroi de fond, la partie (21) d'extrémité ouverte étant dotée d'une portion (22) de jointure attachée à l'élément (10) formant un collier d'allumeur, dans lequel la portion (22) de jointure est une partie formant une bride formée par flexion de la partie (21) d'extrémité ouverte de l'élément (20) de type godet, et où l'élément (20) de type godet et l'ensemble (40) d'allumage sont intégrés par le biais de ladite portion (22) de jointure,
**caractérisé par** une épaisseur de la portion (22) de jointure supérieure à l'épaisseur de la partie (23) formant une paroi latérale, si bien qu'une résistance de la portion de jointure est supérieure à une résistance de la partie formant une paroi latérale, dans lequel la partie (23) formant une paroi latérale est dotée d'une partie fragile (24), plus faible qu'un reste de la partie (23) formant une paroi latérale, au point que seule la partie fragile (24) rompt sous l'effet de la pression ou de la chaleur produite par l'agent (50) producteur de gaz.

2. Générateur de gaz (1) selon la revendication 1, dans lequel la portion (22) de jointure est fixée à l'élément (10) formant un collier d'allumeur par serrage.

3. Générateur de gaz (1) selon la revendication 1 ou 2, dans lequel la partie fragile (24) est une entaille s'étendant dans une direction axiale de l'élément (20) de type godet, et où l'entaille (24) est formée entre la portion (22) de jointure et la paroi du fond (25).

4. Générateur de gaz (1) selon l'une quelconque des revendications 1 à 3, dans lequel une pluralité de parties fragiles (24) sont réparties régulièrement selon une direction circonférentielle de l'élément (20) de type godet.

5. Générateur de gaz (1) selon la revendication 1, dans lequel l'épaisseur de la portion (22) de jointure vaut au moins 1,3 fois l'épaisseur de la partie (23) formant une paroi latérale.
